(19) Europäisches Patentamt

European Patent Office

Office européen des brevets

(11) **EP 3 076 380 A1**

(12) **EUROPEAN PATENT APPLICATION**
published in accordance with Art. 153(4) EPC

(43) Date of publication:
**05.10.2016 Bulletin 2016/40**

(21) Application number: **14864284.6**

(22) Date of filing: **04.11.2014**

(51) Int Cl.:
***G09F 9/30*** (2006.01)

(86) International application number:
**PCT/CN2014/090211**

(87) International publication number:
**WO 2015/074487 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.11.2013 CN 201310598794**

(71) Applicants:
• **Ding, Weikang**
  **Shanghai 200072 (CN)**

• **Xia, Zhanmin**
  **Shanghai 200060 (CN)**

(72) Inventors:
• **Ding, Weikang**
  **Shanghai 200072 (CN)**
• **Xia, Zhanmin**
  **Shanghai 200060 (CN)**

(74) Representative: **De Pablos Riba, Juan Ramon et al**
  **Los Madrazo, 24**
  **28014 Madrid (ES)**

(54) **METHOD FOR DISPLAYING INPUT-VIDEO IN POINT-TO-POINT MANNER ON SPLICING DISPLAY SCREEN**

(57) A method for pixel to pixel displaying an input video on a spliced display screen is provided. In the spliced display screen, actual physical pixels of a display area of each display screen are distributed on the basis of a physical outer diameter of the display screen according to an nK video standard. The physical outer diameter includes a screen margin/bezel and a display area of a display screen. The physical pixels of the nK video standard are uniformly distributed in the whole physical outer diameter of the display screen with a bezel, including being uniformly distributed in the width of the margin/bezel. The actual physical pixels in the display area of the display screen are fewer than those of the nK video standard, and the width occupied by the missing pixels is consistent with that occupied by the display screen margin/bezel. The method provides the probability of directly playing the nK input video and overcomes the limit that the input video respectively sent to each spliced display screen can be played only after being amplified.

Fig. 10

**Description**

**Technical Field**

The present invention relates to a method for realizing pixel to pixel view correspondence between an nK input video pixel matrix and a physical pixel matrix of the display area of the display screen and achieving the pixel to pixel display on the spliced display screen with a margin/bezel, or displaying one pixel (corresponding in integer multiples) in an nK input video collectively by p x q actual physical pixels respectively in the display area of each display screen when all actual physical pixels of the display screens after being spliced are more than that of the input video of the nK video standard according to the integer multiples (p) in the transverse direction and the integer multiples (q) in the longitudinal direction (except that the actual physical pixels provided by the spliced screen are not the integer multiples of the nK video standard).

**Background**

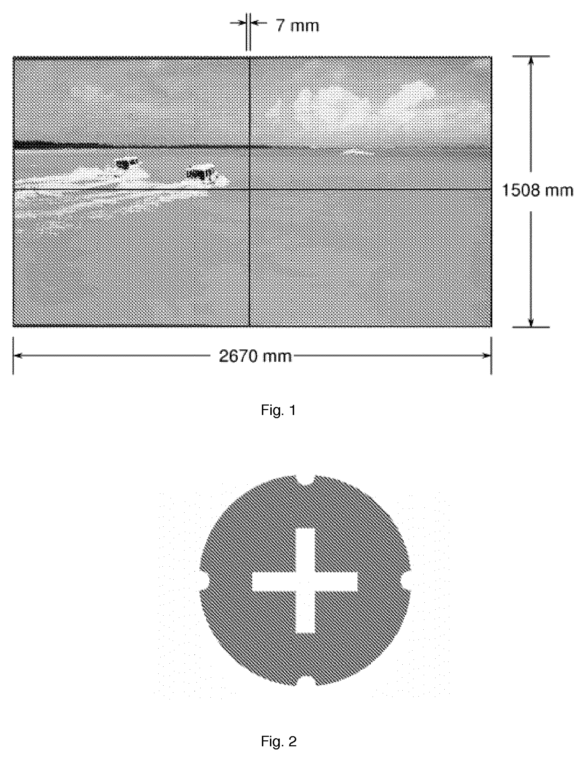

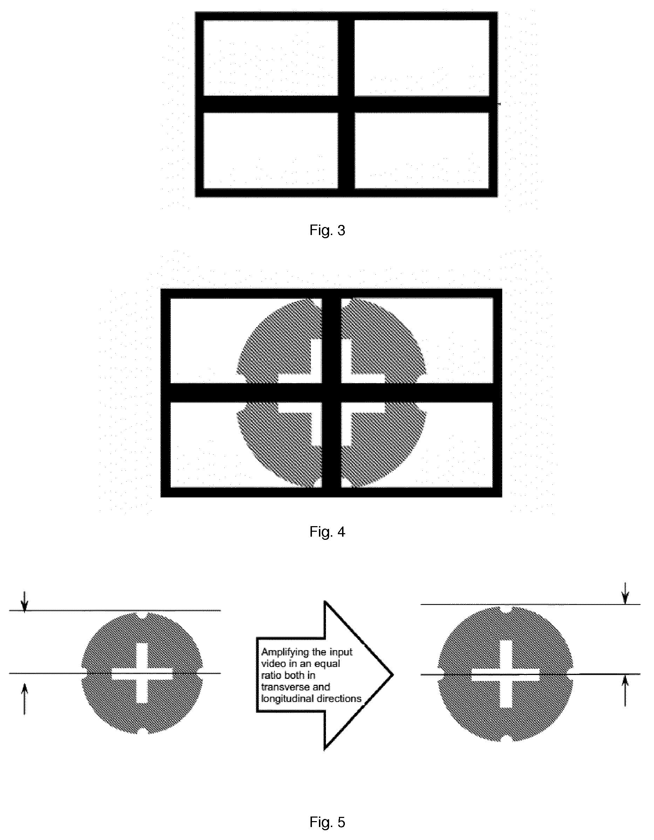

Digital Full High Definition (2K, 1920 x 1080), Ultra High Definition (4K, 3840 x 2160, 4096 x 2160) and 8K (7680 x 4320) display techniques have already been realized and will be a trend in the future. Corresponding to the more exquisite display trend, the display is developed in an increasing size.
However, under the restriction of a series of conditions such as manufacturing equipment, material strength, unit cost, transportation and assembly, the final size of the display screens such as liquid crystal displays (LCD) and plasma (PDP) is limited. To splice the display screens (LCD/PDP) limited in size into a large display system is an effective method for overcoming the above-mentioned restriction.
(2K, 4K, 8K and the like are abbreviated as nK video standard hereinafter, the present invention does not predict the specific pixel definition of the nK video standard in future, for example, whether the 4K video standard is 3840 x 2160 or is 4096 x 2160 in the future; and meanwhile, for any video of a nonstandard format, the pixel to pixel display described herein also can be realized as long as the video pixel of the display screen display area is set and manufactured according to the method described herein)
However, besides the display area, the liquid crystal display (LCD) and plasma (PDP) are provided with a marginal area (hereinafter abbreviated as 'margin/bezel') (as shown in Fig. 1) unable to display the video on periphery. When the display screens are spliced into a large display system, the margin/bezel occupies partial display area of the spliced display system, Fig. 1 shows a condition of 4 display screens of 2 (row) x 2 (column) after being spliced (the length of the diagonal line of the spliced system is 120 inches).
The display screen referred by the present invention includes the liquid crystal display (LCD) and the plasma (PDP) which are collectively called "display screen".
If a circle (as shown in Fig. 2) with 4 notches and a cross (consistent with the width of the margin/bezel) is input to a spliced display area at center point (as shown in Fig. 3) of a 2 x 2 display screen, there are two different display results:

1) image splitting: 4 notches and the cross are completely displayed in the display screen display area, but the margin/bezel with no video display divides the original input video image (as shown in Fig. 4). It is apparent that this result is unacceptable, and because the input video image is "split", the margin/bezel becomes a surplus part of the video image;

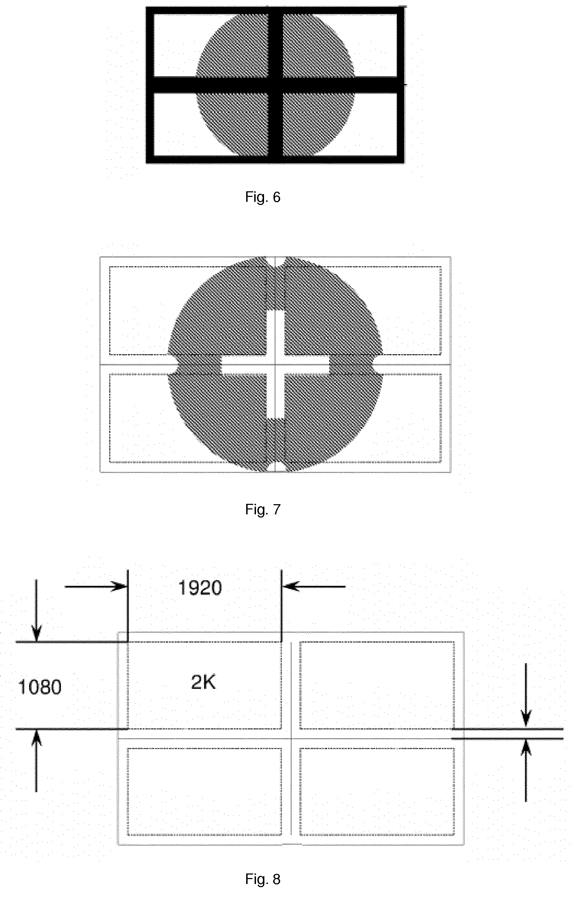

2) image amplification: in order to avoid the occurrence of the above-mentioned result, the input video sent to each display screen is "amplified", so that the amplified input video image can exactly "fully cover" the physical outer diameter including the margin/bezel of the display screen (as shown in Fig. 5). The amplified input video image is displayed on the same 2 x 2 spliced display screen. Then, the input video amplified to the width of the margin/bezel is "covered" by the margin/bezel, and whether this margin/bezel displays the "covered" input video or not, the "amplified" display effect is obviously more in conformity with the visual habit (as shown in Fig. 6).

Although the "amplified" video image of the display result (2) is in more conformity with the visual habit, the 4 notches and the cross of the original input video image are "covered" by the margin/bezel, and a "black grid" unavoidably appears in the spliced display system, which is against the requirement of more exquisite and clearer display.
In order to overcome the phenomenon, new display pixels are added on the margin/bezel with no video display to "restore" the input video image "covered" by the margin/bezel, the video image "restored" on the margin/bezel and the video image of the display area of the display screen are synthesized/integrated and fused into an image consistent with the original input video image, thereby forming a seamless display screen (as shown in Fig. 7). Then, the margin/bezel has a video display function and also has a certain width which may be identical to that of the margin/bezel with no video display, and may be wider than the margin/bezel with no video display due to the added video pixels. (The margin/bezel and the margin/bezel width described herein include the margin/bezel with no video and the width thereof as well as the margin/bezel with video and the width thereof).

Since the display screen has the margin/bezel width, when the display screen is used as a single body and displays independently, these margin/bezel widths do not result in the display problems. But when the display screen with the margin/bezel is spliced, since the input video of nK is played on the spliced display system, the margin/bezel width destroys the correspondence between the input video pixels and the physical pixels of the spliced display screen, which results in the phenomenon that the nK input video cannot be pixel to pixel displayed in the display area of the spliced display screen.

Splicing the display screen with the margin/bezel manufactured according to the existing method into the display system is as shown in Fig. 8. Since the physical pixels of nK are completely manufactured onto the display area of the display screen (abbreviated as "all/full pixels") (taking 2K as an example in Fig. 8), after the display screen is spliced, in order to avoid the "splitting" of the displayed video image, the video image is required to be "amplified" and then sent to each display screen to be displayed so as to "fully cover" the physical outer diameter including the margin/bezel of the display screen (as shown in Fig. 6).

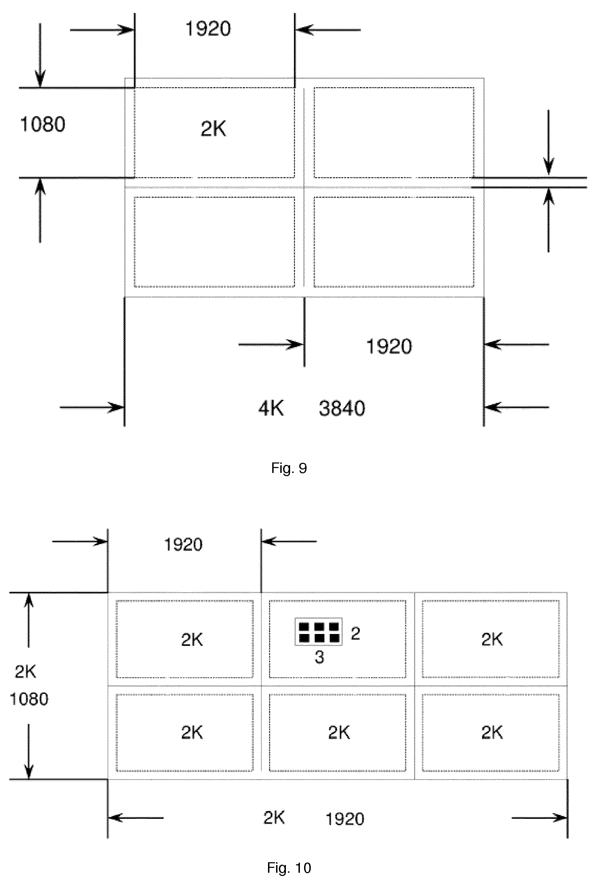

Consequently, it results in the phenomenon that the pixel matrix of the nK input video and the display area of the display screen with the margin/bezel cannot achieve the pixel to pixel display (as shown in Fig. 9), which is obviously against the development trend of 4K, 8K and even higher definition display. Therefore, it is urgently required to invent a novel display way to solve the above-mentioned problems encountered when the existing spliced display screen is in seamless display.

## SUMMARY OF THE INVENTION

An object of the present invention is to solve the problem that pixels of an input video and actual physical pixels in a display area of a display screen with a margin/bezel cannot correspond to each other one by one, namely, the pixel to pixel display cannot be achieved when the display screens manufactured according to the existing method are spliced. The present invention provides a method for realizing the pixel to pixel display in the display screens with the margins/bezels after being spliced. The margin/bezel may or may not display video, thereby meeting 4K, 8K and higher definition display requirements.

The present invention designs a method for pixel to pixel displaying an input video on a spliced display screen, which is characterized in that: in the spliced display screen, actual physical pixels of a display area of each display screen are distributed on the basis of a physical outer diameter of the display screen according to an nK video standard. The physical outer diameter includes a screen margin/bezel and a display area of a display screen. The physical pixels of the nK video standard are uniformly distributed in the entire physical outer diameter of the display screen with bezels, including being uniformly distributed in the width of the margin/bezel. The actual physical pixels in the display screen display area are fewer than those of the nK video standard, and the width occupied by the missing pixels is consistent with that occupied by the display screen margin/bezel. When all actual physical pixels of the display screens after being spliced are more than those of the input video of the nK video standard respectively according to the integer multiples (p) in the transverse direction and the integer multiples (q) in the longitudinal direction, one pixel in the nK input video is displayed collectively by p x q actual physical pixels respectively in the display area of each display screen. The spliced display system formed by the display screens manufactured according to the method of the present invention provides the probability of "directly" playing the nK input video and overcomes the limit that the input video respectively sent to each spliced display screen can be played only after being "amplified", thereby omitting the software and hardware treatment required for "amplifying" the video. However, the software and hardware treatment becomes more difficult as the video standard develops from 2K to 4K, 8K and even higher definition, and the technical requirements and costs are increased. Meanwhile, the "direct" playing enables the input video to be displayed with a most clear and optimal effect. By combining the "direct" playing with the pixel to pixel display, the spliced display screen can meet the development requirement for more exquisite display and larger size with lowest cost and optimum effect.

## BRIEF DESCRIPTION OF THE DRAWINGS

Fig. 1 is a display screen with a black-bezel margin/bezel, 2 rows x 2 columns,

Fig. 2 is a circle with 4 notches and a cross, wherein the width of each of the notches and cross is identical to that of the margin/bezel,

Fig. 3 is a condition of the display screens with the margins/bezels after being spliced,

Fig. 4 is phenomenon of original input video image "splitting",

Fig. 5 shows that an input video image is "amplified" to "fully cover" the outer diameter of the display screen,

Fig. 6 shows a schematic diagram of an input video image "covered" by the margin/bezel,

Fig. 7 shows that video pixels are added to the margin/bezel to enable the "covered" input video image to be restored to display,

Fig. 8 shows a spliced display system formed by manufacturing all pixels of the nK video standard into the display area according to the existing method,

Fig. 9 shows a schematic diagram of "staggering" of the input video pixels and the actual physical pixels in the display area in the spliced display system due to the "neglection" on the margin/bezel width of the display screen set and manufactured according to the existing method,

Fig. 10 shows a schematic diagram of the display screens with margins/bezels after being spliced realizing one-to-one correspondence and " pixel to pixels" display in an integer-multiple correspondence,

Fig. 11 shows a schematic diagram of non-pixel to pixels display of actual physical pixels and input video pixels due to insufficient actual physical pixels provided by the spliced screen, and

Fig. 12 shows a view of pixel distribution set and produced according to the physical outer diameters of display screens with margins/bezels and conforming to the nK video standard.

The present invention is further illustrated below in detail in conjunction with the attached drawings and embodiments.

## DETAILED DESCRIPTION

A method for pixel to pixel displaying an input video on a spliced display screen is provided, which is characterized in that: in the spliced display screen, actual physical pixels of a display area of each display screen are distributed on the basis of a physical outer diameter of the display screen according to an nK video standard. The physical outer diameter includes a screen margin/bezel and a display area of a display screen. The physical pixels of the nK video standard are uniformly distributed in the entire physical outer diameter of the display screen with a bezel, including being uniformly distributed in the width of the margin/bezel. The actual physical pixels in the display screen display area are fewer than those of the nK video standard, and the width occupied by the missing pixels is consistent with that occupied by the display screen margin/bezel. When all actual physical pixels of the display screens after being spliced are more than those of the input video of the nK video standard respectively according to the integer multiples (p) in the transverse direction and the integer multiples (q) in the longitudinal direction, one pixel in the nK input video is displayed collectively by p x q actual physical pixels respectively in the display area of each display screen. In the spliced display screen, actual physical pixels of a display area of each display screen are distributed on the basis of a physical outer diameter of the display screen according to the nK video standard. The physical outer diameter includes a screen margin/bezel and a display area of a display screen. The physical pixels of the nK video standard are uniformly distributed in the entire physical outer diameter of the display screen with a bezel, including being uniformly distributed in the width of the margin/bezel. The actual physical pixels in the display screen display area are fewer than those of the nK video standard, and the width occupied by the missing pixels is consistent with that occupied by the display screen margin/bezel. The above-mentioned physical outer diameter can include the margin/bezel within outer diameter with no video display and also can include the margin/bezel within outer diameter with video display, so that when the spliced display screens manufactured according to the method play the nK video standard, the pixel to pixel display can be realized. When all actual physical pixels of the display screens after being spliced are more than those of the input video of the nK video standard respectively according to integer multiples (p) in the transverse direction and integer multiples (q) in the longitudinal direction, one pixel (corresponding in integer multiples) in the nK input video is displayed collectively by p x q actual physical pixels respectively in the display area of each display screen (as shown in Fig. 10).

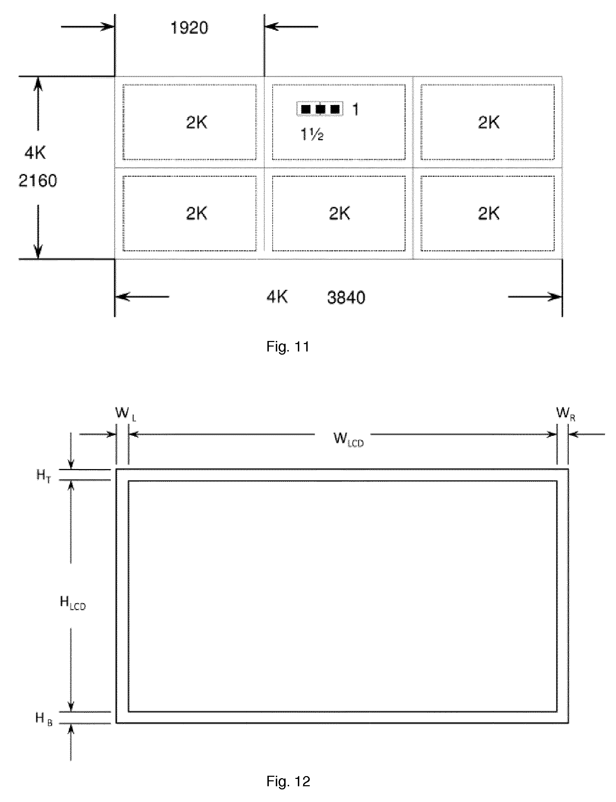

For example, a 2K display screen with pixels set according to the method of the present invention is spliced into a 2 x 3 display system. The pixels in the display area provided by the display system are 3 times of the pixels of the input video in the transverse direction and 2 times of the pixels of the input video in the longitudinal direction, and one pixel (corresponding in integer multiples) of the input video is displayed in the spliced display system also by 3 (transverse) x 2 (longitudinal) actual physical pixels, except that the actual physical pixels provided by the spliced screen are not integer multiples of the nK video standard, as shown in Fig. 11. But the situation does not affect the actual significance of the present invention, and under the above-mentioned situation, if the display screen is not 2K but 4K, the actual situation is immediately returned to the pixel to pixel display condition in Fig. 10. In addition, the non- pixel to pixel display phenomenon is caused by insufficient quantity of the provided display screens or the mismatch of the pixels of the provided display screens rather than being caused by the method of the present invention. On the contrary, the display screen set and manufactured according to the existing method cannot realize the pixel to pixel display effect under any splicing situation unless the total quantity of the spliced display screen is 1, which obviously goes beyond the discussion scope of the present invention.

(The above-mentioned nK input video corresponds to the actual physical pixels in the display area of the display screen in a one-to-one manner or correspondingly displayed in an integer multiple manner, which is uniformly called pixel to pixel/pixel to pixels display)

The spliced display system formed by the display screens manufactured according to the method of the present invention provides the probability of "directly" playing the nK input video and overcomes the limit that the input video respectively sent to each spliced display screen can be played only after being "amplified", thereby omitting the software and hardware treatment required for "amplifying" the video. However, the software and hardware treatment becomes more difficult as the video standard develops from 2K to 4K, 8K and even higher definition, and the technical requirements and costs are increased. Meanwhile, the "direct" playing enables the input video to be displayed with a most clear and optimal effect. By combining the "direct" playing with the pixel to pixel display, the spliced display screen can meet the development requirement for more exquisite display and larger size with lowest cost and optimum effect.

The specific expressions of pixels, which conform to the nK video standard, set and manufactured according to the physical outer diameter of the display screen with the margin/bezel involved in the present invention are as follows:

outer diameter of the display screen with the margin/bezel:

transverse outer diameter of the display screen $W_{Display}$

$= W_L$ (left margin/bezel width)

$+ W_{LCD/PDP}$ (actual display width of the display area)

$+W_R$ (right margin/bezel width)

longitudinal outer diameter of the display screen $H_{Display}$

$= H_T$ (top margin/bezel height)

$+ H_{LCD/PDP}$ (actual display height of the display area)

$+ H_B$ (bottom margin/bezel height)

Pixels of an nK high-definition video source:

transverse video source input pixel $P_{H/in}$

x longitudinal video source input pixel $P_{V/in}$

The physical pixels actually allocated to the display area of the display screen set and manufactured according to the method of the present invention are as follows (as shown in Fig. 12):

transverse actual physical pixels of the display area of the display screen (display area):

$$P_{H/LCD/PDP} = INT(P_{H/in} \times W_{LCD/PDP} / W_{Display} + 0.5)$$

longitudinal actual physical pixels of the display area of the display screen (display area):

$$P_{V/LCD/PDP} = INT(P_{V/in} \times H_{LCD/PDP} / H_{Display} + 0.5)$$

physical pixels allocated to the margin/bezel width of the display screen are as follows:

$$\text{left margin/bezel: } P_L = INT(P_{H/in} \times W_L / W_{Display} + 0.5)$$

$$\text{right margin/bezel: } P_R = INT(P_{H/in} \times W_R / W_{Display} + 0.5)$$

$$\text{top margin/bezel: } P_T = INT(P_{V/in} \times H_T / H_{Display} + 0.5)$$

$$\text{bottom margin/bezel: } P_B = INT(P_{V/in} \times H_B / H_{Display} + 0.5)$$

The present invention does not require four margins/bezels outside the display area of the display screen, whatever there are new-added pixels on the margins/bezels and whatever the resolution of these pixels is, as long as any one of margins/bezels has the physical width. The display screen set and manufactured according to the method of the present invention can realize the pixel to pixel display of the nK input video in the display area of the display screen in the spliced display system, and can "directly" play the input video without any "amplifying" treatment on the input video.

**Claims**

1.  A method for pixel to pixel displaying an input video on a spliced display screen, **characterized in that**: in the spliced display screen, actual physical pixels of a display area of each display screen are distributed on the basis of a physical outer diameter of the display screen according to an nK video standard; the physical outer diameter includes a screen margin/bezel and a display area of a display screen; the physical pixels of the nK video standard are uniformly distributed in the whole physical outer diameter of the display screen with a bezel, including being uniformly distributed in the width of the margin/bezel; and the actual physical pixels in the display area of the display screen are fewer than those of the nK video standard, while the width occupied by the missing pixels is consistent with that occupied by the display screen margin/bezel.

2.  The method for pixel to pixel playing an nK video standard on a spliced display screen according to claim 1, **characterized in that**: one pixel in an nK input video is displayed collectively by p x q actual physical pixels respectively in the display area of each display screen when all actual physical pixels of the display screens after being spliced are more than those of the input video of the nK video standard according to the integer multiples (p) in the transverse direction and the integer multiples (q) in the longitudinal direction.

7 mm

1508 mm

2670 mm

Fig. 1

Fig. 2

Fig. 3

Fig. 4

Amplifying the input video in an equal ratio both in transverse and longitudinal directions

Fig. 5

Fig. 6

Fig. 7

Fig. 8

1920

1080    2K

1920

4K    3840

Fig. 9

1920

2K

2K
1080

2K    1920

2K    2    3

2K

2K    2K    2K

Fig. 10

Fig. 11

Fig. 12

11

# INTERNATIONAL SEARCH REPORT

| International application No. |
| --- |
| **PCT/CN2014/090211** |

**A. CLASSIFICATION OF SUBJECT MATTER**

G09F 9/30 (2006.01) i

According to International Patent Classification (IPC) or to both national classification and IPC

**B. FIELDS SEARCHED**

Minimum documentation searched (classification system followed by classification symbols)

G09F; G09G

Documentation searched other than minimum documentation to the extent that such documents are included in the fields searched

Electronic data base consulted during the international search (name of data base and, where practicable, search terms used)

CNABS, CNTXT, VEN: splice, butt-joint, outer frame, point to point, outer diameter, put+ together, joint+, edge, margin, fringe, verge, frame, point, area, region, diameter, outer, video

**C. DOCUMENTS CONSIDERED TO BE RELEVANT**

| Category* | Citation of document, with indication, where appropriate, of the relevant passages | Relevant to claim No. |
| --- | --- | --- |
| A | CN 102368368 A (VTRON TECHNOLOGIES LTD.), 07 March 2012 (07.03.2012), description, paragraphs [0033]-[0044], and figures 1-5 | 1-2 |
| A | CN 102723048 A (VTRON TECHNOLOGIES LTD.), 10 October 2012 (10.10.2012), the whole document | 1-2 |
| A | CN 102708760 A (VTRON TECHNOLOGIES LTD.), 03 October 2012 (03.10.2012), the whole document | 1-2 |
| A | CN 102496356 A (VTRON TECHNOLOGIES LTD.), 13 June 2012 (13.06.2012), the whole document | 1-2 |
| A | CN 103366648 A (BOE TECHNOLOGY GROUP CO., LTD.), 23 October 2013 (23.10.2013), the whole document | 1-2 |

☒ Further documents are listed in the continuation of Box C.     ☒ See patent family annex.

| | |
| --- | --- |
| *     Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |

| Date of the actual completion of the international search | Date of mailing of the international search report |
| --- | --- |
| 26 January 2015 (26.01.2015) | **15 February 2015 (15.02.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**HE, Xiaofeng**<br><br>Telephone No.: (86-10) **62085127** |

Form PCT/ISA/210 (second sheet) (July 2009)

**INTERNATIONAL SEARCH REPORT**

International application No.

**PCT/CN2014/090211**

C (Continuation).   DOCUMENTS CONSIDERED TO BE RELEVANT

| Category* | Citation of document, with indication, where appropriate, of the relevant passages | Relevant to claim No. |
|---|---|---|
| A | US 2010065832 A1 (PIONEER CORP.), 18 March 2010 (18.03.2010), the whole document | 1-2 |

Form PCT/ISA/210 (continuation of second sheet) (July 2009)

## INTERNATIONAL SEARCH REPORT
### Information on patent family members

| | International application No. |
|---|---|
| | **PCT/CN2014/090211** |

| Patent Documents referred in the Report | Publication Date | Patent Family | Publication Date |
|---|---|---|---|
| CN 102368368 A | 07 March 2012 | CN 102368368 B | 20 March 2013 |
| CN 102723048 A | 10 October 2012 | CN 102723048 B | 23 April 2014 |
| CN 102708760 A | 03 October 2012 | CN 102708760 B | 29 October 2014 |
| CN 102496356 A | 13 June 2012 | CN 102496356 B | 28 May 2014 |
| CN 103366648 A | 23 October 2013 | None | |
| US 2010065832 A1 | 18 March 2010 | EP 2133854 A1 | 16 December 2009 |
| | | WO 2008123416 A1 | 16 October 2008 |
| | | US 8063400 B2 | 22 November 2011 |
| | | JP 4717946 B2 | 06 July 2011 |
| | | JPWO 2008123416 X | 15 July 2010 |

Form PCT/ISA/210 (patent family annex) (July 2009)